# EUROPÄISCHE PATENTSCHRIFT

(11) **EP 1 588 891 B1**
(45) Veröffentlichungstag und Bekanntmachung des Hinweises auf die Patenterteilung: **23.04.2008**
(21) Anmeldenummer: 05008567.9
(22) Anmeldetag: 19.04.2005
(51) Int. Cl.: B60N 2/28

(54) **Kindersitz, welcher an einem Fahrzeugsitz zu befestigen ist**
Child's seat for fixing on a vehicle seat
Siège pour enfant à fixer sur un siège de véhicule

(30) Priorität: 22.04.2004 DE 102004019612
(43) Veröffentlichungstag der Anmeldung: 26.10.2005
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- EP-A- 0 228 158
- EP-A- 0 619 201
- EP-A- 1 215 077
- DE-A1- 3 809 968
- DE-U1- 29 721 468
- US-A- 4 099 778
- US-A- 4 632 456

## Beschreibung

Die Erfindung betrifft einen Kindersitz, welcher an einem Fahrzeugsitz zu befestigen ist, nach dem Oberbegriff des Patentanspruches 1.

Ein derartiger aus EP 0 619 201 A bekannter Kindersitz beinhaltet eine Sitzwanne, eine Rückenlehne und seitlich von der Rückenlehne vorstehende Seitenteile als Sitzbestandteile. Diese Sitzbestandteile sind an einem starren aus rohr- und stabförmigen Rahmenteilen gebildeten Rahmen befestigt. Der Rahmen ist lösbar am Fahrzeugaufbau mittels einer auf die Sitzfläche des Fahrzeugsitzes auflegbaren und am Fahrzeugsitz lösbar mit Kraft- und Formschluss zu befestigenden Trägereinrichtung zu befestigen. An der Unterseite des Rahmens sind Bodenbleche vorgesehen, welche je nachdem, ob der Kindersitz entgegen der Fahrtrichtung oder in Fahrtrichtung am Fahrzeugsitz zu befestigen ist, mittels Schraubenverbindungen an der Trägereinrichtung befestigt werden können.

Aus EP 1 215 077 A ist ein an einen Fahrzeugsitz zu befestigender Kindersitz bekannt, bei welchem die Sitzbestandteile, nämlich Sitzwanne, Rückenlehne und Seitenteile zu einer einstückigen Sitzschale ohne Rahmen verbunden sind: Diese Sitzschale wird mit einer Trägereinrichtung lösbar verbunden, wobei die Trägereinrichtung ihrerseits ebenfalls lösbar mit dem Fahrzeugsitz zu verbinden ist. Gegen ein Nachhintenverschwenken ist die Trägereinrichtung mit einer sich an der Rückenlehne des Fahrzeugsitzes abstützenden Lehnenstütze ausgestattet.

Aufgabe der Erfindung ist es, einen Kindersitz mit verbesserter Sicherheit gegen Verletzungen, insbesondere bei einem Seitenaufprall zu schaffen, welcher mit verbesserter Sicherheit mit der Trägereinrichtung, insbesondere gegen ein Nachvornekippen mit der Trägereinrichtung verbunden werden kann.

Diese Aufgabe wird erfindungsgemäß durch die Merkmale des Patentanspruches 1 gelöst. Die Unteransprüche beinhalten vorteilhafte Weiterbildungen der Erfindung.

In bevorzugter Weise befinden sich am Rahmen Befestigungelemente, die vorzugsweise an der Unterseite des Rahmens vorgesehen sind und welche lösbar mit Kraft- und Formschluss mit einer starren und biegesteifen Trägereinrichtung verbunden werden. Die Trägereinrichtung ist fest mit dem Rahmen des Fahrzeugsitzes über eine lösbare, ebenfalls form- und kraftschlüssige Verbindung zu verbinden. Über den Rahmen des Fahrzeugsitzes und den Sitzunterbau werden die auf den Kindersitz, insbesondere den Rahmen des Kindersitzes einwirkenden Kräfte in den Fahrzeugaufbau geleitet.

Der Rahmen des Kindersitzes kann zwei etwa im rechten Winkel gebogene Rahmenteile aufweisen, die im wesentlichen parallel zueinander angeordnet sind. Über Verbindungsrahmenteile werden die beiden gebogenen Rahmenteile fest miteinander verbunden und im Abstand gehalten.

Bei am Fahrzeugsitz befestigtem Kindersitz sind die Bestandteile der Sitzwanne am horizontalen Bereich der gebogenen Rahmenteile befestigt. Die Bestandteile der Rückenlehne sind im senkrechten Bereich der gebogenen Rahmenteile befestigt.

Der Rahmen besitzt seitliche Rahmenteile, welche an den gebogenen Rahmenteilen befestigt sind. Diese seitlichen Rahmenteile befinden sich zumindest im Bereich der Sitzwanne zum Befestigen der Bestandteile der Sitzwanne und im senkrechten Bereich, insbesondere im Kopfbereich der gebogenen Rahmenteile.

Ferner können im Toraxbereich zusätzliche seitliche Rahmenteile an den gebogenen Rahmenteilen befestigt sein.

Anhand der Figuren wird an einem Ausführungsbeispiel die Erfindung noch näher erläutert.

Es zeigt
- Fig. 1: in perspektivischer Darstellung die Bestandteile eines Ausführungsbeispiels des erfindungsgemäßen Kindersitzes;
- Fig. 2: in perspektivischer Darstellung die Rahmenrückseite des Kindersitzes und einer Lehnenstütze einer Trägereinrichtung; und
- Fig. 3: eine beim Ausführungsbeispiel in der Trägervorrichtung zum Einsatz kommende Rastbolzenmechanik.

Ein wesentlicher Bestandteil des dargestellten Ausführungsbeispiels ist ein Rahmen 1, an welchem die Sitzbestandteile des Kindersitzes befestigt sind. Der Rahmen 1 wird vorzugweise von rohr- oder stabförmigen Rahmenteilen gebildet. Es handelt sich um einen starren, verwindungsfreien Rahmen, der vorzugsweise aus Metall, jedoch auch aus einem die erforderliche Festigkeit aufweisenden Kunststoff bestehen kann. Die Rahmenteile beinhalten zwei im wesentlichen im rechten Winkel gebogene Rahmenteile'8 und 9. Die Rahmenteile 8 und 9 sind etwa parallel zueinander angeordnet und über Verbindungsrahmenteile 10, 11 fest miteinander verbunden. Falls erforderlich, können zusätzliche Verbindungsrahmenteile zwischen den gebogenen Rahmenteile 8 und 9 vorgesehen sein. Durch die Verbindungsrahmenteile 10, 11 werden die Rahmenteile 8 und 9 im Abstand voneinander gehalten. Der Rahmen 1 erhält hierdurch die erforderliche Steifigkeit und Widerstandskraft gegen Verwindung.

Zur Befestigung von Sitzbestandteilen sind an den Rahmenteilen 8 und 9 weitere Rahmenteile befestigt. Die Sitzbestandteile weisen Seitenteile 4, 5 auf, welche sich im Kopfbereich und Toraxbereich erstrecken. Zwischen den beiden Seitenteilen befindet sich eine Rückenlehne 17. Die beiden Seitenteile 4, 5 erstrecken sich von der Fläche der Rückenlehne 17 nach vorne. Ferner beinhalten die Sitzbestandteile eine Sitzwanne 12, welche von einem Sitzflächenformkörper 20 und Beckenseitenteilen 21 gebildet wird. Der Sitzflächenformkörper 20 ist zwischen den beiden Beckenseitenteilen 21 angeordnet und vorzugsweise in verschiedene Positionen nach vorne und hinten verstellbar am Rahmen 1 gelagert. Die Seitenteile 4, 5 und die Beckenseitenteile 21 bestehen aus Hartschaumformkörper, die an den Innenseiten mit energieabsorbierendem weichen Schaumstoff gepolstert sind.

Zur Befestigung der Seitenteile 4, 5 sind zumindest im Kopfbereich an den Rahmenteilen 8, 9 seitliche Rahmenteile 22 und 23 befestigt. Die seitlichen Rahmenteile 22, 23 befinden sich in den oberen Teilen der senkrechten Bereiche der gebogenen Rahmenteile 8, 9. Die seitlichen Rahmenteile 22, 23 erstrecken sich von den gebogenen Rahmenteilen 8 und 9 nach vorne.

Zur Befestigung der Beckenseitenteile 21 dienen seitliche Rahmenteile 2, 3, welche sich von den horizontalen Bereichen der gebogenen Rahmenteile 8, 9 nach oben erstrecken.

Ferner können für eines oder beide Seitenteile 4, 5 zwischen den oberen seitlichen Rahmenteilen 22, 23 und den unteren seitlichen Rahmenteilen 2, 3 zusätzliche seitliche Rahmenteile 6 im Toraxbereich vorgesehen sein. Durch diese zusätzlichen seitlichen Rahmenteile 6 erfolgt eine zusätzliche Abstützung der äußeren Seitenteile 4, 5 auch im Toraxbereich. Die zusätzlichen seitlichen Rahmenteile 6 bestehen aus sich im wesentlichen senkrecht zwischen den unteren, seitlichen Rahmenteilen 2, 3 und den oberen, seitlichen Rahmenteilen 22, 23 sich erstreckende Rahmenteile 24 sowie schräg dazu verlaufende Rahmenteile 25, welche sich im wesentlichen zwischen den unteren seitlichen Rahmenteilen 2, 3 und den senkrechten Bereichen der gebogenen Rahmenteile 8, 9 erstrecken. Durch die zusätzlichen seitlichen Rahmenteile 6 wird eine Erhöhung der Festigkeit und Steifigkeit des Rahmens 1 vorzugsweise an der der Fahrzeugaußenseite zugekehrten Seite, welche in der Figur gezeigt ist, erreicht.

Die Seitenteile 4 und 5 erstrecken sich beim dargestellten Ausführungsbeispiel vom Kopfbereich bis zum Beckenbereich und bilden im Bereich der Rückenlehne Sitzflächen 26 und 27 im Beckenbereich. Die zur Mitte der Rückenlehne 17 umgebogenen Sitzflächen 26 und 27 an den Seitenteilen 4, 5 schließen die Sitzwanne 12 nach hinten hin zusammen mit dem unteren Teil der Sitzlehne 17 ab. Die Seitenteile 4 und 5 sind sowohl an den seitlichen Rahmenteilen 22 und 23 als auch an den sich an den gebogenen Stellen anschließenden vertikalen Bereichen der Rahmenteile 8 und 9 des Rahmens 1 abgestützt.

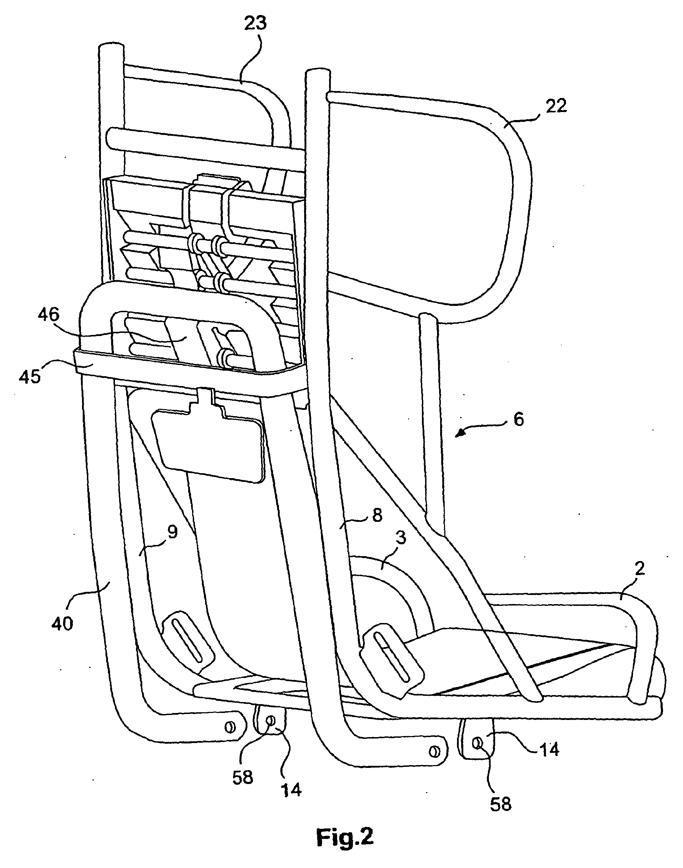

Zur Bildung der Rückenlehne 17 ist ferner an einem oben liegenden querverlaufenden Befestigungssteg 28 ein flexibles Bahnmaterial 18 aus textilem Gewebe, aus Kunststoff oder dergleichen befestigt. Der Befestigungssteg erstreckt sich oberhalb des Kopfbereiches zwischen den beiden gebogenen Rahmenteilen 8 und 9 und ist an diesen Rahmenteilen befestigt. Im Bereich des unteren Endes ist das flexible Bahnmaterial 18 mit dem Sitzflächenformkörper 20 verbunden. Im Kopfbereich ist bei dem in Fig. 2 für die Gruppe I dargestellten Kindersitz ein Rückenlehnenpolster 19 am Bahnmaterial 18 befestigt.

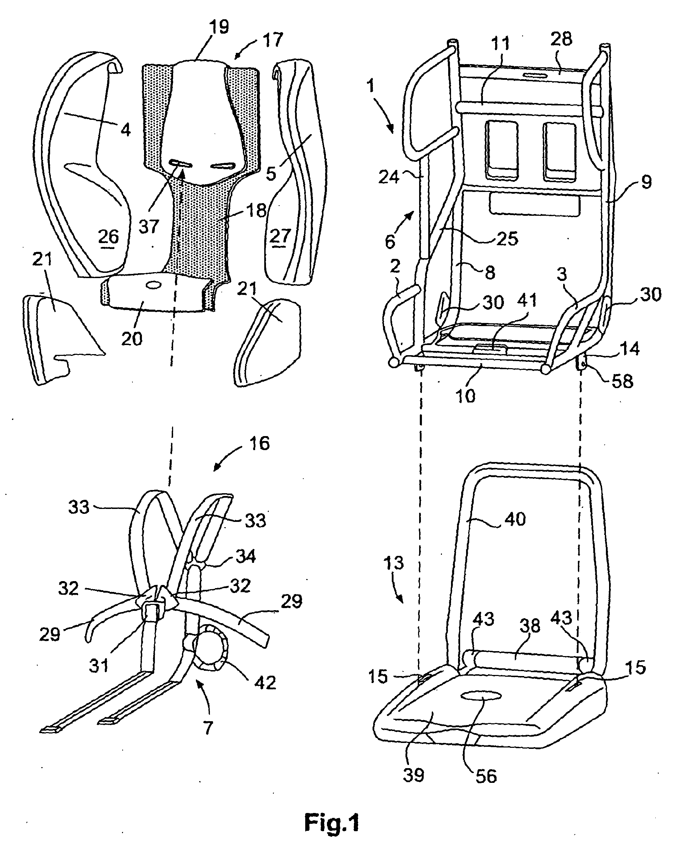

Für die Ausbildung des Kindersitzes für die Gruppe I (Fig. 2) ist am Kindersitz ein Sicherheitsgurtsystem 16 integriert. Dieses Gurtsystem ist als 5-Punkt-Gurtsystem ausgebildet, wie aus Fig. 1 zu ersehen ist. Beckengurte 29 sind an ihren Enden in entsprechenden Verankerungen 30, welche am Rahmen 1 befestigt sind, befestigt. Die Verankerungen 30 befinden sich beim dargestellten Ausführungsbeispiel in den gebogenen Abschnitten der Rahmenteile 8 und 9. Die anderen Enden der Beckengurte 29 werden lösbar in einem Gurtschloss 31 fixiert. Hierzu sind die Enden der Beckengurte 29 mit in das Gurtschloss 31 einsteckbaren Einsteckteilen 32 fest verbunden. Das Gurtschloss 31 ist mit einem Gurtband 36 in einer Verankerungsstelle 41 an einem Verbindungsrahmenteil zwischen den beiden waagrecht verlaufenden Schenkeln der Rahmenteile 8, 9 am Rahmen 1 befestigt. Mit den Einsteckteilen 32 sind ferner vordere Enden von Schultergurten 33 fest verbunden. Die rückwärtigen Enden der Schultergurte 33 sind über einen Verbindungsbeschlag 34 fest mit einem Ende eines an der Rückseite des flexiblen Bandmaterials 18 verlaufenden Gurtbandes 35 verbunden. Die Schultergurte 33 sind hierzu durch Schlitze 37 in der Rückenlehne 17 hinter die Rückenlehne zum Verbindungsbeschlag 34 geführt. Die Schlitze 37 erstrecken sich beim dargestellten Ausführungsbeispiel durch das Rückenlehnenpolster 19 und das flexible Bahnmaterial 18. Die Schultergurte 33 können auch in unterschiedlichen Höhen durch entsprechende Schlitze zum Verbindurigsbeschlag 34 umgelenkt sein. Das vom Verbindungsbeschlag 34 entlang der Rückenlehne nach vorne geführte Gurtband 35 ist mit einer nicht näher dargestellten Verankerungsstelle am Rahmen, beispielsweise am Verbindungsrahmenteil 10 befestigt. Ferner ist im Gurtband 35 in Form einer Sollbruchstelle, beispielsweise einer Reißnaht ein Kraftbegrenzer 7 vorgesehen. Bei erhöht einwirkender Rückhaltekraft reißt die Reißnaht des Kraftbegrenzers 2 auf und verlängert das Gurtband 35 und damit die beiden Schultergurte 33, um eine durch eine Bandschlaufe 42 vorgegebene Länge. Es ist auch möglich, den Ablauf der Bandschlaufe mit einer Reibungskraft zu beaufschlagen.

Der Fahrzeugsitz wird an einer Trägereinrichtung 13 befestigt. Die Trägereinrichtung 13 ist starr ausgebildet und fest mit einem Rahmenteil 38 des nicht näher dargestellten Fahrzeugsitzes an zwei Befestigungsstellen 43, 44 verbunden. Die Trägereinrichtung 13 weist einen flachen Grundkörper 39 auf, der auf der Sitzfläche des nicht näher dargestellten Fahrzeugsitzes aufliegt. Mit dem Grundkörper 39 ist starr eine Lehnenstütze 40 verbunden, welche beim dargestellten Ausführungsbeispiel als U-förmiger Bügel ausgebildet ist. Die Lehnenstütze 40 kann auch eine andere Form, beispielsweise Plattenform oder dergleichen aufweisen, um eine feste Abstützung an der Rückenlehne des nicht näher dargestellten Fahrzeugsitzes zu erreichen. Die feste Verbindung der Trägereinrichtung 13 mit dem Rahmen, beispielsweise Rahmenteil 38 des Fahrzeugsitzes liegt in der Nähe der Verbindungsstelle, an welcher in einem stumpfen Winkel die Grundplatte 39 und die Lehnenstütze 40 miteinander verbunden sind. Die Befestigungsstellen 43, 44 können durch lösbare Schnappverschlüsse gebildet sein, welche an der Rückseite der Grundplatte 39 im Bereich der Verbindungsstelle zwischen der Lehnenstütze 40 und der Grundplatte 39 vorgesehen sind. Beim Fixieren der Befestigungsstellen 43, 44 am Rahmenteil 38 wird die Trägereinrichtung 13 an der Oberfläche und an der Rückenlehne des Fahrzeugsitzes festgespannt. Dadurch wird eine stabile Fixierung der Trägereinrichtung 13 am Fahrzeugsitz erreicht.

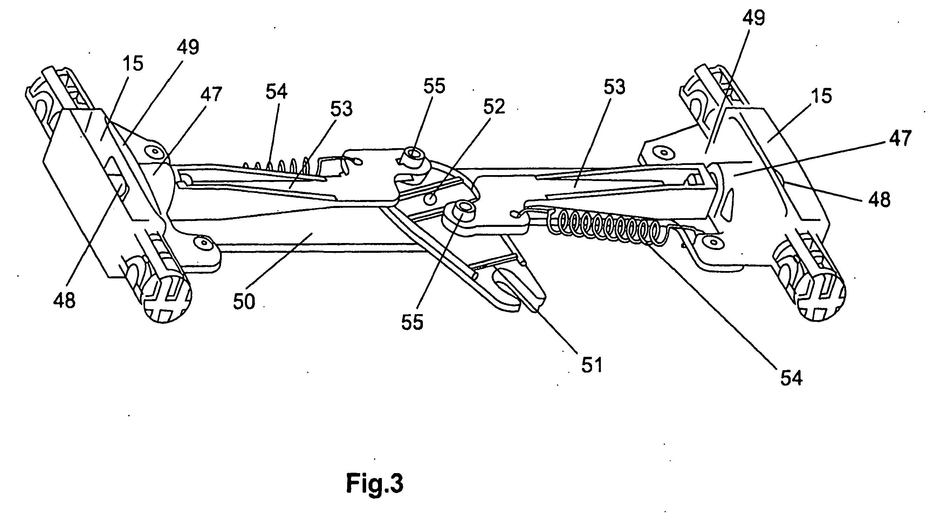

Der Kindersitz wird mit Hilfe von am Rahmen 1 befestigten Arretierelementen 14 fest mit der Trägereinrichtung 13 verbunden. Die Arretierelemente 14, welche an der Unterseite des Rahmens 1 befestigt sind, werden hierzu in kraft- und formschlüssige Verbindung mit entsprechenden Arretierelementen 15 an der Trägereinrichtung 13 in Eingriff gebracht. Dieser Eingriff kann beispielsweise durch an der Trägereinrichtung 13 vorgesehenen Rastbolzen 48, die in entsprechenden Rastlöchern 58 an den Arretierelementen 14 in Eingriff kommen, gewährleistet werden, wie im Einzelnen noch anhand der Fig. 3 erläutert wird. Durch diesen lösbaren Eingriff wird der Kindersitz über den Rahmen 1 fest auf die Oberseite des Grundkörpers 39 gedrückt. Ferner liegt der Kindersitz mit der Rückenlehne 17 fest an der Lehnenstütze 40 an. Hierzu ist im senkrechten Bereich der Rahmenteile 8, 9 an diesen ein Haltebügel 45 befestigt. Wie aus der Fig. 2 zu ersehen ist, wird der Haltebügel über die Lehnenstütze 40 geschoben und umfasst in waagrechter Anordnung die senkrechten Schenkel der Lehnenstütze 40. Auf diese Weise ist der Kindersitz gegen ein Kippen nach vorne gesichert.

Ferner ist am Rahmen 1 an einem Verbindungsrahmenteil, welches an den beiden parallelen Rahmenteilen 8 und 9 befestigt ist, ein Untergriffsteil 46 befestigt, welches unter den waagrecht verlaufenden Verbindungsschenkel der Lehnenstütze 40 untergreift und den Kindersitz gegen ein Verrutschen nach oben sichert. Auf diese Weise erreicht man eine stabile Lagerung des Kindersitzes am Fahrzeugsitz in allen drei räumlichen Bewegungsrichtungen. Ferner ist gewährleistet, dass die auf den Kindersitz einwirkenden Kräfte über den Rahmen 1 in die fest mit dem Fahrzeugsitz verbundene Trägereinrichtung 13 und damit in den Fahrzeugaufbau geleitet werden.

In der Fig. 3 ist der Rastbolzenmechanismus dargestellt, mit welchem Rastbolzen 48 betätigt werden, die in Rastöffnungen der Befestigungselemente 14 beim Einstecken in Rastöffnungen 15 der Trägereinrichtung 13 in Eingriff kommen. Die Rastbolzen 48 sind an äußeren Enden von Schieber 53 befestigt und in Bolzenführungen 47 definiert an Montageblöcken 49 in Richtungen ihrer Längsachsen geführt. Die Montageblöcke 49 sind fest an dem Grundkörper 39 gelagert. Die Montageblöcke 49 sind über eine Montageplatte 50 fest miteinander verbunden. An der Montageplatte 50 ist schwenkbar ein Umlenkhebel 41 um eine Schwenkachse 52 gelagert. An bezüglich der Schwenkachse 52 diametral liegenden Anlenkstellen 55 sind die inneren Enden der Schieber 53 am Umlenkhebel 51 gelagert. Auf die beiden Schieber wirken Zugfedern 54, die mit ihren einen Enden mit den Montageblöcken 49 verbunden sind und mit ihren anderen Enden an den Schiebern 53 angreifen. Durch die Zugfedern 54 werden die Rastbolzen 48 nach außen in ihre Raststellungen in die Rastlöcher 58 in entgegengesetzten Richtungen vorgespannt. Bei auf einem Fahrzeugsitz angeordnetem Kindersitz verlaufen diese Vorspannrichtungen im wesentlichen senkrecht zur Fahrzeuglängsrichtung.

Zum Lösen der Rastbolzen aus den Eingriffsstellungen in den Rastlöchern 58 der Befestigungselemente 14 wird der Umlenkhebel 41 gegen die Kraft der Zugfedern 54 verschwenkt (in der Fig. 3 im Uhrzeigersinn). Diese Verschwenkung kann beispielsweise mit einem an der Grundplatte 39 vorgesehenen Betätigungsknopf 56 erfolgen. Der Betätigungsknopf 56 kann durch Anheben des Sitzflächenformkörpers 20 hierzu freigelegt werden.

Durch die oben beschriebene Verbindung der beiden Rastbolzen 48 über den Umlenkhebel 51 mit diametral zur Schwenkachse 52 des Umlenkhebels liegenden Anlenkstellen 55 am Umlenkhebel werden z.B. bei einem Crash, insbesondere Seiten-Crash, auf die Rastbolzen 48 einwirkenden Kräfte, insbesondere Trägheitskräfte gegeneinander aufgehoben. Hierdurch ist gewährleistet, dass die Rastbolzen in ihren in die Rastlöcher 58 eingreifenden Raststellungen verbleiben. Ein selbsttätiges Lösen wird damit unterbunden.

## Patentansprüche

1. Kindersitz, welcher an einem Fahrzeugsitz zu befestigen ist, mit einer Sitzwanne, einer Rückenlehne, seitlich von der Rückenlehne vorstehenden Seitenteilen als Sitzbestandteile, und einer Trägereinrichtung (13) wobei die Sitzbestandteile (4, 5, 12, 17) an einem starren aus rohr- oder stabförmigen Rahmenteilen gebildeten Rahmen (1), welcher am Fahrzeugaufbau mittels der auf die Sitzfläche des Fahrzeugsitzes auflegbaren und am Fahrzeugsitz lösbar mit Kraft- und Formschluss zu befestigenden Trägereinrichtung (13) lösbar zu befestigen ist, und wobei an der Unterseite des Rahmens (1) Befestigungselemente (14) vorgesehen sind, die mit entsprechenden Befestigungselementen (15, 48) an der Trägereinrichtung (13) lösbar mit Form- und Kraftschluss zu verbinden sind, **dadurch gekennzeichnet, dass** die Befestigungselemente (14) an der Unterseite des Rahmens (1) Rastlöcher (58) aufweisen, in die an der Trägereinrichtung (13) federnd vorgespannte Rastbolzen (48) in Eingriff zu bringen sind, dass die Rastbolzen (48) bei am Fahrzeugsitz befestigter Trägereinrichtung (13) quer zur Fahrzeuglängsachse beweglich gelagert sind und in entgegengesetzten Richtungen vorgespannt sind, dass die Trägereinrichtung (13) eine an der Rückenlehne des Fahrzeugsitzes abstützbare Lehnenstütze (40) aufweist und dass im senkrechten Bereich der Rahmenteile (8, 9) ein über die Lehnenstütze (40) zu schiebender Haltebügel (45) befestigt ist.

2. Kindersitz nach Anspruch 1,
**dadurch gekennzeichnet, dass** der Rahmen (1) zwei etwa im rechten Winkel gebogene und im wesentlichen parallel zueinander angeordnete Rahmenteile (8, 9) aufweist, die über Verbindungsrahmenteile (10, 11) fest miteinander verbunden sind.

3. Kindersitz nach Anspruch 1 oder 2,
**dadurch gekennzeichnet, dass** im wesentlichen horizontale Bereiche der gebogenen Rahmenteile (8, 9) zur Befestigung der Sitzwanne (12) und im wesentlichen senkrechte Bereiche der gebogenen Rahmenteile (8, 9) zur Befestigung der Rückenlehne (17) und der Seitenteile (4, 5) dienen.

4. Kindersitz nach einem der Ansprüche 1 bis 3,
**dadurch gekennzeichnet, dass** seitliche Rahmenteile (2, 3; 22, 23) zumindest im Bereich der Sitzwanne (12) und im Kopfbereich am Rahmen, insbesondere an den gebogenen Rahmenteilen (8, 9) vorgesehen sind.

5. Kindersitz nach einem der Ansprüche 1 bis 4,
**dadurch gekennzeichnet, dass** im Toraxbereich wenigstens ein zusätzliches seitliches Rahmenteil (6) am Rahmen (1) vorgesehen ist.

6. Kindersitz nach einem der Ansprüche 1 bis 5,
**dadurch gekennzeichnet, dass** die Sitzwanne (12) von einem Sitzflächenformkörper (20) und zwei Beckenseitenteile (21), zwischen denen der Sitzflächenformkörper (20) angeordnet ist, gebildet ist.

7. Kindersitz nach einem der Ansprüche 1 bis 6,
**dadurch gekennzeichnet, dass** die Rückenlehne (17) ein flexibles Bahnmaterial (18) aufweist, an welchem ein Rückenlehnenpolster (19; 42) vorzugsweise lösbar befestigt ist.

8. Kindersitz nach einem der Ansprüche 1 bis 7,
**dadurch gekennzeichnet, dass** mit dem flexiblen Bahnmaterial (18) der Sitzflächenformkörper (20) verbunden ist, der am Rahmen (1) verstellbar gelagert ist.

## Claims

1. A child's seat which is to be fixed to a vehicle seat comprising a seat base, a backrest, side portions projecting laterally from the backrest, as seat component parts, and a carrier device (13), wherein the seat component parts (4, 5, 12, 17) are fixed on a rigid frame (1) which is formed from frame members in tube or bar form and which is to be releasably fixed to the vehicle structure by means of the carrier device (13) which can be placed on the seat surface of the vehicle seat and which is to be fixed to the vehicle seat releasably in positively locking and force-locking relationship, and wherein provided at the underside of the frame (1) are fixing elements (14) which are to be connected releasably in positively locking and force-locking relationship to corresponding fixing elements (15, 48) on the carrier device (13), **characterised in that** the fixing elements (14) at the underside of the frame (1) have latching holes (58) into which latching pins (48) resiliently biased on the carrier device (13) are to be brought into engagement, that the latching pins (48) are mounted movably transversely with respect to the longitudinal axis of the vehicle when the carrier device (13) is fixed to the vehicle seat and are biased in opposite directions, that the carrier device (13) has a backrest support (40) which can be supported at the backrest of the vehicle seat and that a holding loop (45) which is to be pushed over the backrest support (40) is fixed in the perpendicular region of the frame members (8, 9).

2. A child's seat according to claim 1 **characterised in that** the frame (1) has two frame members (8, 9) which are bent approximately at a right angle and which are arranged substantially parallel to each other and which are fixedly connected together by way of connecting frame members (10, 11).

3. A child's seat according to claim 1 or claim 2 **characterised in that** substantially horizontal regions of the bent frame members (8, 9) serve for fixing the seat base (12) and substantially perpendicular regions of the bent frame members (8, 9) serve for fixing the backrest (17) and the side portions (4, 5).

4. A child's seat according to one of claims 1 to 3 **characterised in that** lateral frame members (2, 3; 22, 23) are provided at least in the region of the seat base (12) and in the head region on the frame, in particular the curved frame members (8, 9).

5. A child's seat according to one of claims 1 to 4 **characterised in that** at least one additional lateral frame member (6) is provided on the frame (1) in the thorax region.

6. A child's seat according to one of claims 1 to 5 **characterised in that** the seat base (12) is formed by a seat surface shaped body (20) and two pelvis side portions (21), between which the seat surface shaped body (20) is arranged.

7. A child's seat according to one of claims 1 to 6 **characterised in that** the backrest (17) has a flexible web material (18), to which a backrest cushion (19; 42) is preferably releasably fixed.

8. A child's seat according to one of claims 1 to 7 **characterised in that** the seat surface shaped body (20) is connected to the flexible web material (18) and is mounted displaceably on the frame (1).

## Revendications

1. Siège pour enfant à fixer sur un siège de véhicule, comprenant un baquet de siège, un dossier, des parties latérales faisant saillie latéralement du dossier en tant que composants de siège et un dispositif de support (13), dans lequel les éléments constitutifs de siège (4, 5, 12, 17) sont fixés à un bâti (1) rigide formé de parties tubulaires ou en forme de barre et qui est destiné à être fixé de manière amovible à la structure du véhicule par le dispositif de support (13) qui peut être posé sur la surface du siège de véhicule et qui est destiné à être fixé amovible par une liaison à complémentarité de force ou de forme au siège de véhicule, dans lequel il est prévu des éléments de fixation ( 14) sur le côté inférieur du bâti (1), qui sont destinés à être reliés de manière amovible par une liaison à complémentarité de forme et de force au dispositif de support (13), au moyen d'éléments de fixation (15, 48) correspondants, **caractérisé en ce que** les éléments de fixation (14) ont sur le côté inférieur du bâti (1) des trous d'encliquetage (58) dans lesquels s'engagent des axes d'encliquetage (48) précontraints par ressort sur le dispositif de support (13), **en ce que** les axes d'encliquetage (48) sont montés mobiles transversalement par rapport à l'axe longitudinal du véhicule et sont précontraints dans des sens opposés lorsque le dispositif de support (13) est fixé au siège de véhicule, **en ce que** le dispositif de support (13) a un support de dossier (40) pouvant s'appuyer contre le dossier du siège de véhicule et **en ce qu'**un étrier de retenue (45), destiné à coulisser sur le support de dossier (40), est fixé dans la zone verticale des parties de bâti (8, 9).

2. Siège pour enfant selon la revendication 1,
**caractérisé en ce que** le bâti (1) a deux parties de bâti ( 8, 9) coudées à peu près à angle droit et disposées sensiblement parallèlement l'une à l'autre, et qui sont reliées solidairement entre elles par des parties de bâti de liaison (10, 11).

3. Siège pour enfant selon la revendication 1 ou 2,
**caractérisé en ce que** des zones essentiellement horizontales des parties de bâti (8, 9) coudées servent à 1a fixation du baquet de siège (12) et des zones essentiellement verticales des parties de bâti (8, 9) coudées servent à la fixation du dossier (17) et des parties latérales (4, 5).

4. Siège pour enfant selon l'une des revendications 1 à 3,
**caractérisé en ce que** des parties de bâti (2, 3 ; 22, 23) latérales sont prévues au moins dans la zone du baquet de siège (12) et dans la zone de tête du bâti, en particulier sur les parties de bâti (8, 9) coudées.

5. Siège pour enfant selon l'une des revendications 1 à 4,
**caractérisé en ce qu'**il est prévu sur le bâti (1) au moins une partie de bâti (6) latérale supplémentaire dans la zone du thorax.

6. Siège pour enfant selon l'une des revendications 1 à 5,
**caractérisé en ce que** le baquet de siège (12) est formé par un corps moulé de surface de siège (20) et deux parties latérales de bassin (21) entre lesquelles est disposé le corps moulé de surface de siège (20).

7. Siège pour enfant selon l'une des revendications 1 à 6,
**caractérisé en ce que** le dossier (17) a un matériau en bande (18) souple sur lequel est fixé, de préférence de manière amovible, un rembourrage de dossier (19 ; 42).

8. Siège pour enfant selon l'une des revendications 1 à 7,
**caractérisé en ce que** le corps moulé de surface de siège (20 ) est relié au matériau en bande (18) souple et est monté avec possibilité de réglage sur le bâti (1).
